# EUROPEAN PATENT SPECIFICATION

(11) **EP 0 348 188 B1**
(45) Date of publication and mention of the grant of the patent: **15.09.1993**
(21) Application number: 89306282.8
(22) Date of filing: 22.06.1989
(51) Int. Cl.: H04N 7/13, H04L 7/08, H04J 3/06, H04L 7/04

(54) **Data transmission**
Datenübertragung
Transmission des données

(30) Priority: 23.06.1988 GB 8814976
(43) Date of publication of application: 27.12.1989
(73) Proprietor: BRITISH BROADCASTING CORPORATION, London W1A 1AA (GB)
(72) Inventor: Robinson, Adrian Paul, Tadworth Surrey, KT20 6NP (GB)
(74) Representative: Abnett, Richard Charles

(56) References cited:
- EP-A- 0 085 651
- EP-A- 0 119 972
- DE-A- 2 827 615
- GB-A- 2 124 807

## Description

This invention relates to data transmission systems.

The invention is particularly concerned with systems in which a chain code is transmitted.

A chain code is derived from a maximal length pseudo-random binary sequence generator. Briefly, a pseudo-random binary sequence (p.r.b.s.) generator comprises a shift register with selected stages logically combined by modulo-2 addition (exclusive-OR gates) and fed back to its input. Provided the stage combination is right, a sequence of bits will be produced which repeats after 2ⁿ - 1 bits, where n is the number of register stages. This is the maximal length sequence; if a sequence of shorter length is required a detector is connected to all the shift register stages and when a particular n-bit state is detected the input to the shift register is inverted. By choosing the detected state appropriately a sequence, or chain code, of any desired length m up to 2ⁿ- 1 can be achieved.

This invention is concerned with a system in which additional information can be transmitted along with such a chain code.

In accordance with this invention an additional data item is transmitted together with a chain code, by making a second transmission of the chain code phase displaced with reference to the first transmission by an amount indicative of the data item to be transmitted.

A chain code can be used to identify the block number in a sequence of blocks by using a method described in our British Patent GB-A-2 124 807 (Chambers) in which one bit of the chain code is associated with each block in the sequence. In a maximal length p.r.b.s. each possible group of n successive bits (there are 2ⁿ - 1 such groups) is different. Thus after n blocks have been received n code bits will have been made available and the position in the 2ⁿ - 1 bits sequence uniquely established. This equally applies with a chain code of less than maximal length in which case there are m possible groups of n bits. Our earlier patent refers in one alternative to transmitting each chain code bit together with its complement along with each data block.

British Patent Specification No. 975,792 describes the use of a 15-bit chain code generator in which additional information relating to eight possible events is transmitted by inverting a respective one of eight bits of the code by use of a switch. In the implementation shown in Figures 4 to 7 of that specification additional information of this type from each of a plurality of sources is assembled at an intermediate station and transmitted onward to a receiver. This is achieved by initiating at the intermediate station a chain code which is modified so as to indicate which of the sources is producing additional information and transmitting cycles of the chain code from the intermediate station in alternation with cycles of the chain code from the sources. However, this involves actual modification of the chain codes transmitted. Transmission errors would make it impossible to recover the transmitted information. By the use of phase displacement of two chain codes in accordance with this invention the information can still be recovered even if transmission errors occur.

The invention will be described in more detail by way of example with reference to the accompanying drawings, in which:
Figure 1 is a block diagram of the relevant part of a receiver capable of receiving and detecting a chain code with additional information in accordance with this invention;
Figure 2 illustrates the timing of the code bits transmitted with blocks of data; and
Figure 3 is a block diagram of the relevant part of a transmitter.

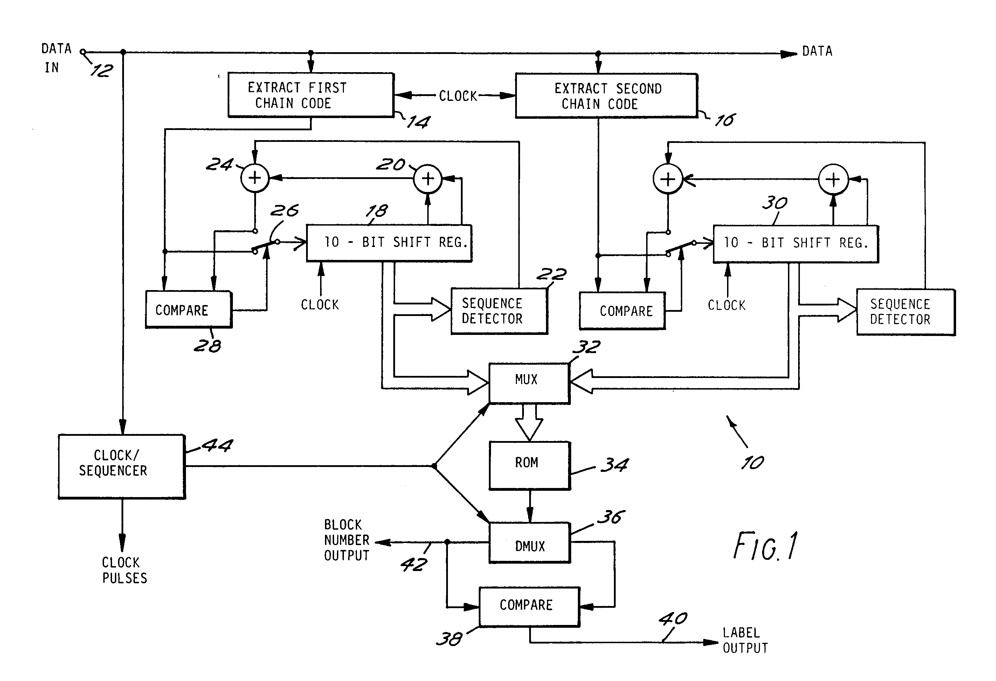

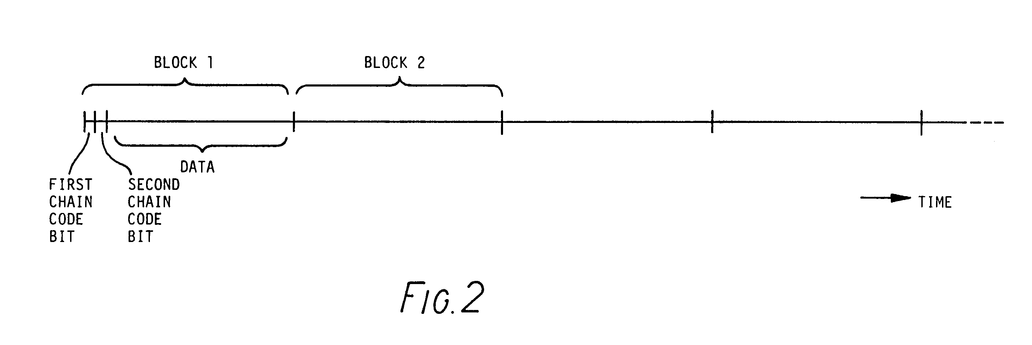

The receiver 10 illustrated in Figure 1 includes a data input 12 which receives serial data in blocks forming a 640 block cycle. Associated with the incoming data, a 640-bit chain code is transmitted. The chain code is transmitted twice namely as a first and second chain code. Thus, each block has associated with it one bit from each of the two chain codes, see Figure 2.

The two chain codes are transmitted phase displaced. The amount of phase displacement represents an additional data item, which in this case may be termed a label, which is to be transmitted.

First and second circuits 14 and 16 extract from the data applied to the input 12 the respective digits of the first and second transmitted chain codes respectively. The first chain code bits extracted by circuit 14 are applied to a 10-bit shift register 18. At least one modulo-2 adder 20, diagrammatically illustrated, provides feedback coupling the last stage and one other stage to the shift register input. To reduce the length of the code from the maximal length of 1023 bits to 640 bits, a sequence detector 22 detects a specified 10-bit state in the shift register 18, and on the occurrence of such a state enables the input of a modulo-2 adder 24 connected to the output of adder 20, thereby inverting the input to the shift register for that one bit. By appropriate choice in known way of the detected state, the last portion of the maximal length sequence is "short circuited" to produce a chain code of 640 bits. All 640 sets of 10 successive bits are different, so that after any 10 bits have been transmitted we know where we are in the sequence. As is well known with chain code generators a state detector (not shown) is also included to detect the all-zero state and insert a one when this occurs.

At the input to the shift register 18, there ia a selector switch 26 which applies to the shift register either the output of modulo-2 adder 24 (for normal running) or the output of the chain code extracting circuit 14. A comparator 28 is connected to receive the outputs of adder 24 and circuit 14, and control the switch 26 in response thereto. Initially, switch 26 is placed in its lower position as shown in Figure 1 and the incoming code bits start to be loaded into the shift register 18. After 10 bits have been loaded into the register, the gate 24 should be producing the same bits as are received in the subsequent incoming data and extracted by circuit 14. The comparator 28 monitors this. When there have been seven successive agreements, then it assumes that synchronism has been reliably achieved, and changes over switch 26. The comparator continues to monitor the agreement between the outputs of gate 24 and circuit 14 and re-starts the initialisation process if synchronism appears to have been lost.

As is well known, a chain code of m bits can be generated by a shift register of n bits, where 2ⁿ - 1 is greater than or equal to m. Thus, for a 640 bit chain code a 10-bit shift register is required. The number of successive agreements which should be monitored before synchronism is assumed is derived as a statistical function of the likely error rate, e.g. the logarithm to base 2 of the odds against failing to detect an error.

Thus, on receipt of the chain code bits these are loaded into the shift register and once the shift register is full and its output has been assured, the shift register continues in flywheel mode locked to the received chain code.

Similar circuitry is connected to circuit 16 to receive the second chain code bit associated with each incoming block of data. This similarly will lock to the bits of the second chain code and follow the second chain code sequence. A second shift register 30 is provided with similar circuitry to the shift register 18 for this purpose.

The contents of the shift registers 18 and 30 are multiplexed in a multiplexer 32 and applied alternately to a read-only memory (ROM) 34. As the chain codes are of the same type they can be decoded by the same ROM; no additional ROM storage is needed. Thus, the 10-bit contents of the two shift registers are continuously separately decoded in the ROM 34. These outputs are applied to a demultiplexer 36 where the first and second decoded outputs are applied to a comparison circuit 38. The comparison circuit determines the difference between the two received chain codes. For example, with a 640-bit chain code, the 10 bits currently in register 18 may represent state 247 in the chain code when decoded by the ROM 34. The 10 bits contained in the shift register 30 may correspond to state 255 in the 640-bit code. The difference obtained by subtracting these two decoded values is therefore eight, and in this way the data item 8 has been transmitted by the phase displacement of the two codes. The result of this comparison, namely the value 8 in this case, is applied to a label output 40. The decoded state of the first chain code from the demultiplexer 36 is applied to a block number output 42.

Suitable clock and sequencing circuitry 44 is included and is not shown in detail as such circuitry will be readily assembled by the man skilled in the art from the functional description given herein. It will be appreciated, however, that a sequencing output of the circuitry 44 is applied both to the multiplexer 32 and demultiplexer 36, so that the single ROM 34 can be used to decode the contents of both the shift registers 18 and 30.

In an alternative arrangement, the second chain code may be transmitted in reverse order to the first chain code. The shift register 30 then cycles, in known manner, in opposite direction to the shift register 18. When this arrangement is used, the comparison circuit 38 adds to two outputs of the demultiplexer 36. The result of this addition will be the label being transmitted. The addition may be modulo-640. Where, however, the transmitted label is known to be say a 7-bit value, the addition may be modulo-128.

Thus, at a transmitter the 640 block cycle is transmitted and associated with each block are two data bits, the first of which receives a corresponding data bit from the first chain code, and the second of which receives a corresponding data bit from the second chain code. The application of the two chain codes to the blocks is undertaken with a defined phase relationship relative to a point on the 640 block cycle, this phase relationship representing the data label which is to be transmitted.

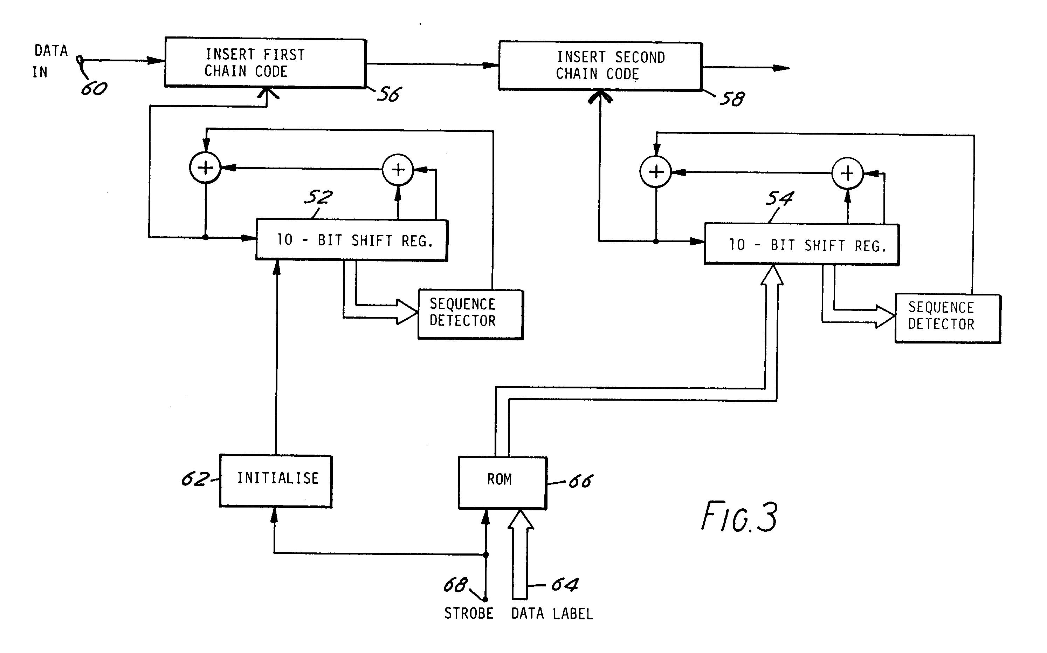

A suitable transmitter is illustrated in Figure 3. Two shift registers 52,54 correspond to the shift registers 18,30 of Figure 1 and include associated sequence detectors and modulo-2 adders to generate a 640-bit chain code in each case. The respective chain codes are applied to first and second chain code inserting circuits 56 and 58 where the chain codes are inserted in the respective blocks of data received at an input 60.

A data label is coded by phase displacement of the first and second chain codes. On receipt of the data label at an input 64 together with a strobe signal at an input 68, an initialisation circuit 62 sets the first shift register 52 to a datum value. The data label received at input 64 is also applied to a read only memory 66 which generates an output which is phase displaced from the aforesaid datum by an amount dependent upon the data label to be transmitted. The output of the ROM is used to initialise the second shift register 54.

It may not be desirable to re-initialise the first chain code on receipt of a data label. Thus in an alternative arrangement, the state of the first shift register is decoded by a decoding ROM to obtain its current state. This state can then be modified according to the data label, e.g. by adding or subtracting the label, and the result applied to a coding ROM. The output of the coding ROM is used to initialise the second shift register. Another alternative is that on receipt of a data label to be transmitted, the contents of the first shift register are loaded into the second shift register. Extra clock pulses are then applied to the second shift register to cause the required phase displacement. The number of such clock pulses represents the data label to be conveyed.

The drawings are very diagrammatic and represent only one possible implementation of the receiver and transmitter. The apparatus may be implemented in many other ways in which case the Figures are best regarded as functional diagrams; indeed many of the functions may be implemented in software.

In the arrangement described, complete lock-up of both shift registers should be achieved within seventeen blocks of commencement of the transmission. Furthermore, once the two shift registers have been properly synchronised, the additional data label will be immediately available. Thus, there is no delay in transmission of the data label.

The two chain codes are transmitted continuously and without modification. The data label can be recovered if there are transmission errors. The continuous sequences are only broken when the label changes; the phase displacement must then change and a portion must be omitted from at least one of the sequences. The two chain code sequences do not have to be the same; though they should be of the same length. If they are the same, as described above, only one decoding table is required in the receiver which minimises the ROM requirements.

The bits of the chain codes may be associated with blocks of data to accompany a broadcast television signal. More than one bit of each chain code may be associated with each data block as described in our British Patent GB-A-2 220 093, published 28/12/89. Any suitable method may be employed in which the average rates of transmission of the two chain codes are equal, and in which it is possible to identify which bits belong to each chain code. In particular, the system is suitable for use with a scrambled version of the signal described in a publication entitled "Specification of a Standard for UK Stereo with Television Transmissions" by British Broadcasting Corporation, September 1986. Such a system is termed NICAM 728. The code bits can be used to transmit information needed to descramble scrambled transmissions.

In this specification the term "transmit" (and its derivatives) is used in a general sense to include storage and other signal processing which may not involve sending the signal over long distances. Similar considerations apply to the term "receive".

## Claims

1. A method of data transmission comprising the steps of:
transmitting a first m bit chain code;
transmitting a second m bit chain code phase displaced relative to a datum defined by the first chain code by an amount dependent upon an additional data item;
receiving the first and second chain codes and providing a chain code output; and
determining the phase displacement of the second chain code relative to a datum defined by the first chain code to provide an output dependent upon the additional data item.

2. A method according to claim 1, in which the method comprises the steps of transmitting a plurality of blocks of data with bits of the first and second chain codes associated with the blocks respectively, whereby the chain code output serves to identify the blocks.

3. A method according to claims 1 or 2, in which the chain codes are transmitted phase displaced but in the same sense and the decoded values of the received codes are subtracted.

4. A method according to claims 1 or 2, in which one chain code is transmitted phase displaced and in the reversed sequence to the other, and the decoded values of the received codes are added.

5. A method according to any preceding claim, in which the two chain codes are of the same type.

6. A method according to any preceding claim, in which the chain codes are transmitted substantially simultaneously on a bit-by-bit basis.

7. Apparatus for receiving data signals, comprising an input, means for extracting from the input the code bits of a first and a second m-bit chain code, and means for determining the phase displacement of the second chain code relative to a datum defined by the first chain code to provide an output dependent thereon.

8. Apparatus according to claim 7, including a single ROM for decoding the chain codes and means for applying n-bit sets of the codes separately to the ROM, where 2ⁿ - 1 is greater than or equal to m.

9. Apparatus according to claims 7 or 8, in which the determining means comprises means for subtracting the decoded code values.

10. Apparatus according to claims 7 or 8, in which the determining means comprises means for adding the decoded values.

11. Data transmission apparatus comprising means for generating first and second m-bit chain codes, and means for phase displacing the second chain code relative to a datum defined by the first chain code.

12. Apparatus according to claim 11, in which at least one bit from each chain code is associated with a respective block of data to be transmitted.

## Patentansprüche

1. Datenübertragungsverfahren, das folgende Schritte umfaßt: das Übertragen eines ersten m-Bit-Ketten-Code;
das Übertragen eines zweiten m-Bit-Ketten-Code, der relativ zu einer gegebenen Größe, die durch den ersten Ketten-Code bestimmt wird, um einen Betrag phasenverschoben ist, der von einem zusätzlichen Datenposten abhängt;
das Empfangen des ersten und zweiten Ketten-Code und die Bildung eines Ketten-Code-Ausgangssignals und
das Ermitteln der Phasenverschiebung des zweiten Ketten-Code relativ zu einer gegebenen Größe, die durch den ersten Ketten-Code bestimmt ist, um ein Ausgangssignal zu erzeugen, das von dem zusätzlichen Datenposten abhängt.

2. Verfahren nach Anspruch 1, bei dem eine Vielzahl von Datenblöcken mit Bits des ersten und zweiten Ketten-Code, die jeweils den Blöcken zugeordnet sind, übertragen werden, so daß das Ketten-Code-Ausgangssignal zur Identifizierung der Blöcke dient.

3. Verfahren nach Anspruch 1 oder 2, bei dem die Ketten-Codes phasenverschoben, jedoch im gleichen Sinne, übertragen und die decodierten Werte der empfangenen Codes subtrahiert werden.

4. Verfahren nach Anspruch 1 oder 2, bei dem der eine Ketten-Code phasenverschoben und in umgekehrter Reihenfolge zum anderen übertragen wird und die decodierten Werte der empfangenen Codes addiert werden.

5. Verfahren nach einem der vorstehenden Ansprüche, bei dem die beiden Ketten-Codes vom gleichen Typ sind.

6. Verfahren nach einem der vorstehenden Ansprüche, bei dem die Ketten-Codes im wesentlichen gleichzeitig Bit für Bit übertragen werden.

7. Vorrichtung zum Empfangen von Datensignalen mit einem Eingang, einem Mittel zum Extrahieren der Code-Bits eines ersten und eines zweiten m-Bit-Ketten-Code aus dem Eingang und einem Mittel zum Feststellen der Phasenverschiebung des zweiten Ketten-Code relativ zu einer gegebenen Größe, die durch den ersten Ketten-Code bestimmt wird, um ein davon abhängiges Ausgangssignal zu erzeugen.

8. Vorrichtung nach Anspruch 7 mit einem einzigen ROM zum Decodieren der Ketten-Codes und einem Mittel zum separaten Eingeben von n-Bit-Sätzen der Codes in den ROM, wobei 2ⁿ-1 größer als oder gleich m ist.

9. Vorrichtung nach Anspruch 7 oder 8, bei der das Feststellmittel ein Mittel zum Subtrahieren der decodierten Code-Werte aufweist.

10. Vorrichtung nach Anspruch 7 oder 8, bei der das Feststellmittel ein Mittel zum Addieren der decodierten Werte aufweist.

11. Datenübertragungsvorrichtung mit einem Mittel zum Erzeugen eines ersten und eines zweiten m-Bit-Ketten-Code und einem Mittel zur Phasenverschiebung des zweiten Ketten-Code relativ zu einer gegebenen Größe, die durch den ersten Ketten-Code bestimmt ist.

12. Vorrichtung nach Anspruch 11, bei der wenigstens ein Bit aus jedem Ketten-Code jeweils einem zu übertragenden Datenblock zugeordnet ist.

## Revendications

1. Un procédé de transmission de données comprenant les étapes consistant à :
transmettre un premier code chaîné à m bits;
transmettre un deuxième code chaîné à m bits déphasé, par rapport à une donnée de référence définie par le premier code chaîné, d'une quantité dépendant d'un élément additionnel de donnée;
recevoir le premier et le deuxième codes chaînés et fournir une sortie de code chaîné; et
déterminer le déphasage du deuxième code chaîné par rapport à une donnée de référence définie par le premier code chaîné afin de fournir une sortie qui dépend de l'élément additionnel de donnée.

2. Un procédé selon la revendication 1, dans lequel le procédé comprenant les étapes consistant à transmettre une série de blocs de données, des bits du premier et du deuxième codes chaînés étant associés au bloc respectivement, grâce à quoi la sortie de code chaîné sert à identifier les blocs.

3. Un procédé selon l'une des revendications 1 ou 2, dans lequel les codes chaînés sont transmis en étant déphasés mais dans le même sens et les valeurs décodées des codes reçus sont soustraites.

4. Un procédé selon la revendication 1 ou 2, dans lequel un code chaîné est transmis en étant déphasé et dans la séquence inverse de l'autre, et les valeurs décodées des codes reçus sont additionnées.

5. Un procédé selon une revendication précédente quelconque, dans lequel les deux codes chaînés sont du même type.

6. Un procédé selon une revendication précédente quelconque, dans lequel les codes chaînés sont transmis de façon sensiblement simultanée sur une base de bit par bit.

7. Appareil de réception de signaux de données comprenant une entrée, un moyen permettant d'extraire, de l'entrée, des bits de codes d'un premier d'un deuxième de codes chaînés à m bits, et un moyen de permettant de déterminer le déphasage du deuxième code chaîné par rapport à une donnée de référence définie par le premier code chaîné afin de fournir une sortie qui en dépend.

8. Appareil selon la revendication 7, incluant une mémoire morte unique pour décoder les codes chaînés et un moyen d'application d'ensemble de n bits des codes séparément à la mémoire morte, où l'exposant 2ⁿ -1 est supérieur ou égal à m.

9. Appareil selon la revendication 7 ou 8, dans lequel le moyen de détermination comprend un moyen de soustraction des valeurs de codes décodées.

10. Appareil selon la revendication 7 ou 8, dans lequel le moyen de détermination comprend un moyen d'addition des valeurs décodées.

11. Appareil de transmission de données comprenant un moyen de génération d'un premier et d'un deuxième codes chaînés à m bits, et un moyen de déphasage du deuxième code chaîné par rapport à une donnée définie par le premier code chaîné.

12. Appareil selon la revendication 11, dans lequel au moins un bit venant de chaque code chaîné est associé à un bloc respectif de données à transmettre.
